# DEMANDE DE BREVET EUROPEEN

(11) **EP 1 005 145 A1**
(43) Date de publication de la demande: **31.05.2000**
(21) Numéro de dépôt: 99410166.5
(22) Date de dépôt: 22.11.1999
(51) Int. Cl.: H02M 1/00

(54) **Alimentation continue haute et basse tension**

(30) Priorité: 24.11.1998 FR 9814918
(71) Demandeur: STMicroelectronics S.A., 94250 Gentilly (FR)
(72) Inventeur: Teissier, Maxime, 04400 Barcelonnette (FR); Bourgeois, Jean-Marie, 01220 Divonne-les-Bains (FR); Ravon, Jean-Michel, 13710 Fuveau (FR); Bardouillet, Michel, 13790 Rousset (FR)
(74) Mandataire: de Beaumont, Michel

(57) **Abrégé**

L'invention concerne un circuit de fourniture d'une tension continue de valeur haute à partir de la sortie d'un pont redresseur (1) sur un condensateur (C) de forte capacité, et de fourniture de tensions d'alimentation basses (V1, V2), comprenant une première diode (D) connectée entre la sortie du pont redresseur et le condensateur (C), des premier (T1) et second (T2) transistors montés en cascode, un moyen (R1, Z1) pour fixer le potentiel de la borne de commande du premier transistor, un moyen (T3, R2) pour réduire le potentiel de cette borne de commande quand la tension redressée dépasse une valeur prédéterminée, un circuit de régulation (7) connecté au point de connexion des premier et second transistors, et un moyen pour appliquer au second transistor une impulsion de mise en conduction de durée déterminée (Y) après que la tension de sortie du pont a dépassé ladite valeur déterminée.

## Description

La présente invention concerne un circuit propre à fournir à partir d'un pont redresseur, d'une part, une alimentation continue destinée à alimenter une charge et, d'autre part, une ou plusieurs alimentations basse tension propres à alimenter des circuits secondaires tels que des circuits de commande.

La présente invention vise en particulier l'alimentation de moteurs de faible puissance, c'est-à-dire d'une puissance inférieure à 1 kilowatt, par exemple des moteurs que l'on trouve dans de nombreuses applications industrielles ou domestiques telles que machine à laver, aspirateur, ventilateur... Dans de telles applications, deux contraintes s'imposent. La première est que le coût du circuit soit faible, la deuxième est que le circuit renvoie un minimum de parasites électriques sur le secteur.

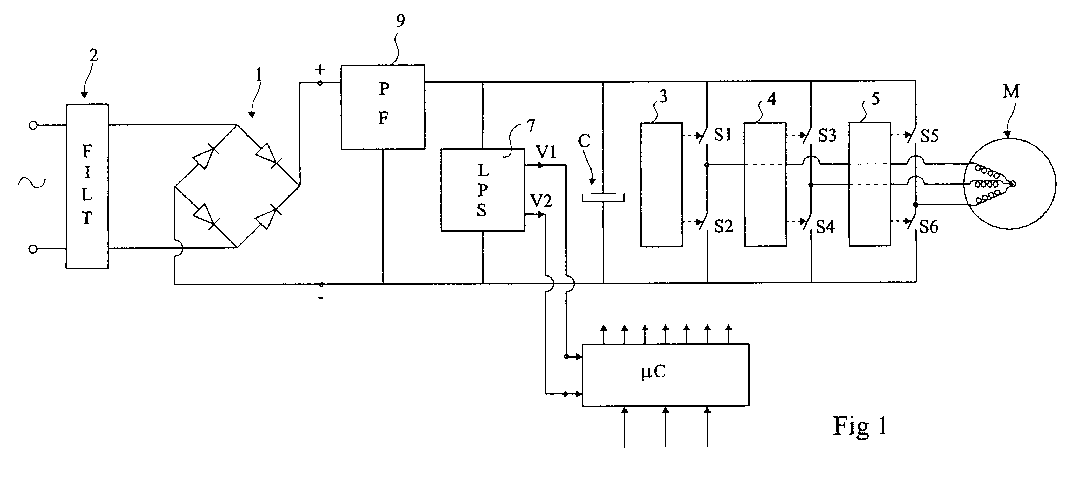

L'architecture générale d'un circuit classique de commande de moteur est illustrée en figure 1. Ce circuit comprend un pont redresseur 1 connecté aux bornes du secteur par l'intermédiaire d'un circuit de filtrage 2. Entre les bornes de sortie positive et négative du pont redresseur est connecté un condensateur de valeur élevée C destiné à stocker et à lisser la tension continue devant être fournie à une charge. Pour la commande d'un moteur alternatif M, il est par exemple prévu trois bras de pont comprenant chacun deux commutateurs S1-S2, S3-S4, S5-S6. L'ouverture et la fermeture de ces commutateurs pour alimenter les enroulements inducteurs du moteur triphasé sont déterminées par un circuit de commande comprenant d'une part des circuits adaptateurs 3, 4, 5 couplés aux paires de commutateurs, d'autre part un microcontrôleur *µ*C destiné à appliquer les signaux de commande aux divers circuits adaptateurs. On pourra par exemple utiliser des circuits adaptateurs de type L6386 et un microcontrôleur de type ST92141, tous deux disponibles auprès de la société STMicroelectronics.

En outre, le circuit doit comprendre des moyens pour alimenter le microcontrôleur et éventuellement d'autres éléments du circuit. Pour cela, on prévoit un circuit d'alimentation basse tension (LPS) 7 fournissant par exemple deux tensions continues V1 et V2, de valeurs respectives 15 V et 5 V. De préférence, le circuit d'alimentation basse tension 7 est connecté entre les bornes positive et négative du même pont redresseur que celui qui alimente le circuit principal. En outre, aux bornes du pont redresseur, est généralement prévu un circuit 9 d'amélioration du facteur de puissance (PF).

Les circuits classiques rassemblent rarement tous les éléments décrits ci-dessus. Dans le cas plus particulier d'un circuit tel que représenté, il est difficile de concevoir une association d'un circuit d'amélioration du facteur de puissance et d'alimentation basse tension qui soit globalement à faible coût. On rappellera que le but du circuit 9 d'amélioration du facteur de puissance est essentiellement d'élargir l'impulsion de courant qui est extraite du secteur chaque fois que l'on veut recharger le condensateur C, c'est-à-dire à chaque alternance, afin de réduire les harmoniques de courant renvoyés sur le secteur et donc de réduire les dimensions des composants (inductance et capacité) du filtre 2, ce qui contribue également à réduire les coûts. En effet, actuellement, en pratique, la somme des coûts du circuit de fourniture de tension faible et de l'ensemble du circuit de réduction de facteur de puissance (s'il en est prévu un) et du filtre constitue sensiblement la moitié du coût de l'ensemble du circuit.

Ainsi, pour abaisser les coûts d'un circuit d'alimentation du type décrit, la présente invention propose de combiner le circuit de fourniture de tension basse et le circuit d'amélioration du facteur de puissance.

Pour atteindre ces objets, la présente invention prévoit un circuit de fourniture d'une tension continue de valeur haute à partir de la sortie redressée d'un pont redresseur sur un condensateur de forte capacité, et de fourniture de tensions d'alimentation basses, comprenant une première diode connectée entre la première borne de sortie du pont redresseur et une première borne du condensateur ; des premier et second transistors montés en cascode, la première borne principale du premier transistor étant connectée à la première borne de sortie du pont redresseur, la deuxième borne principale du second transistor étant connectée à la deuxième borne de sortie du pont ; un moyen pour fixer le potentiel de la borne de commande du premier transistor à une première tension par rapport à la deuxième borne du pont ; un moyen pour réduire le potentiel de ladite borne de commande quand la tension sur la première borne dépasse une valeur prédéterminée ; un circuit de régulation connecté au point de connexion des premier et deuxième transistors ; une deuxième diode reliant le point de connexion des premier et deuxième transistors à la borne de commande du premier transistor ; et un moyen pour appliquer au deuxième transistor une impulsion de mise en conduction de durée déterminée après que la tension de sortie du pont a dépassé ladite valeur déterminée.

Selon un mode de réalisation de la présente invention, le premier transistor est un transistor bipolaire à grille isolée (IGBT).

Selon un mode de réalisation de la présente invention, le deuxième transistor est un transistor MOS.

Selon un mode de réalisation de la présente invention, les signaux de commande dudit moyen pour réduire le potentiel sont fournis par un microcontrôleur à partir d'une détection de la tension de sortie du pont redresseur, de la tension de sortie de la première diode, et du courant dans cette première diode.

Selon un mode de réalisation de la présente invention, le circuit de régulation comprend une troisième diode connectée au point de connexion des premier et deuxième transistors et un condensateur connecté entre cette diode et la borne basse de la tension redressée.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
la figure 1, décrite précédemment, représente l'architecture générale d'un circuit d'alimentation continue d'une charge et de fourniture de basse tension ;
la figure 2 représente de façon schématique un mode de réalisation simplifié d'un circuit selon la présente invention ;
la figure 3 représente des courbes de tension et de courant destinées à illustrer le fonctionnement du circuit selon la présente invention ; et
la figure 4 est une représentation un peu plus détaillée d'un mode de réalisation d'un circuit selon la présente invention.

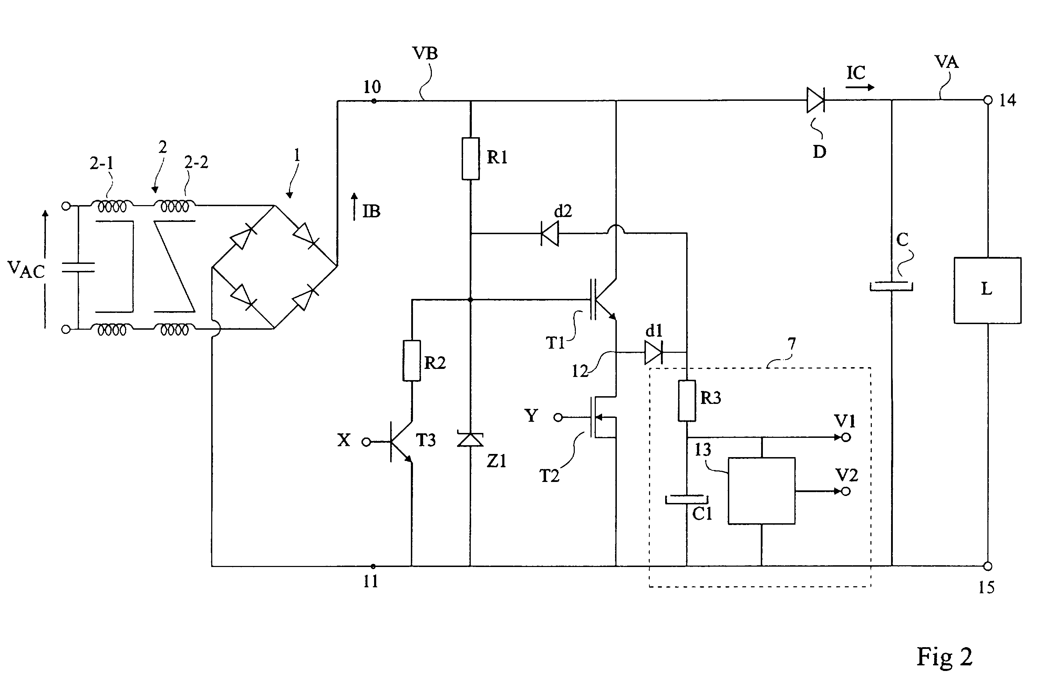

Comme le représente la figure 2, un mode de réalisation d'un circuit selon la présente invention utilise un pont redresseur 1. Le primaire du pont redresseur est connecté à des bornes d'alimentation alternative VAC par l'intermédiaire d'un filtre 2 qui comprend par exemple, comme cela est représenté, un condensateur aux bornes de la tension alternative et des inductances couplées aux bornes d'entrée du pont redresseur. On a représenté à titre d'exemple un couple d'inductances à noyau de ferrite 2-1 et un couple d'inductances à noyau de fer 2-2. Les inductances 2-2 sont de valeurs plus élevées et ont pour rôle essentiel de filtrer les composantes basse fréquence (fréquences inférieures à environ 1 kHz). Les inductances 2-1 à noyau de ferrite sont destinées à éliminer les composantes haute fréquence (fréquences supérieures à environ 1 kHz) qui, comme on le verra ci-après, ne sont pas prépondérantes lors du fonctionnement du circuit selon la présente invention dans lequel les diverses commandes sont exercées uniquement au rythme des alternances de la tension alternative.

Le circuit selon la présente invention comprend, entre les bornes de sortie positive et négative 10 et 11 du pont redresseur 1, le montage cascode de deux transistors T1 et T2. Le transistor T1 est de préférence un transistor à commande en tension. En outre, ce transistor devant, comme on le verra ci-après, supporter une certaine tension inverse, on choisira de préférence un transistor bipolaire à grille isolée (IGBT) plutôt qu'un transistor MOS classique. Le transistor T1 est dimensionné pour supporter la tension entre les bornes 10 et 11, c'est-à-dire une tension maximale de l'ordre de 300 volts quand la tension alternative d'entrée, VAC, est la tension du secteur à 220 volts. Le transistor T2 est un transistor de faible puissance, de préférence un transistor MOS facilement commandable par des signaux logiques. Le collecteur du transistor T1 est connecté à la borne 10, l'émetteur du transistor T1 est connecté au drain du transistor T2 et la source du transistor T2 est connectée à la borne 11. Le transistor T2 reçoit sur sa borne de commande un signal Y qui sera décrit ci-après. La grille du transistor T1 est polarisée par une diode Zener Z1. Plus particulièrement, cette grille est connectée d'une part à la borne 10 par une résistance de forte valeur R1, d'autre part à la borne 11 par la diode Zener Z1. En outre, la grille du transistor T1 est susceptible d'être connectée à la borne 11 par l'intermédiaire d'un interrupteur en série avec une résistance R2. Dans le mode de réalisation représenté, cet interrupteur est constitué d'un transistor bipolaire T3 dont le collecteur est connecté à la résistance R2 et dont l'émetteur est connecté à la borne 11. La base du transistor T3 est susceptible de recevoir un signal X. Le point de connexion 12 entre les transistors T1 et T2 est relié par l'intermédiaire d'une diode d1 à un circuit d'alimentation basse tension 7. Dans le mode de réalisation représenté, la cathode de la diode d1 est connectée à la borne 11 par l'intermédiaire d'une résistance R3 et d'un condensateur C1. Le point de connexion de la résistance R3 et du condensateur C1 constitue une première borne de sortie à une première tension basse V1. Cette tension V1 alimente un circuit de régulation classique 13 fournissant une deuxième tension continue régulée V2. On notera que la tension V1 est sensiblement égale à la tension Zener de la diode Z1 moins la chute de tension grille-émetteur du transistor T1 moins la chute de tension en direct de la diode d1. Ainsi, si l'on souhaite que la tension V1 soit de l'ordre de 15 volts, la tension Zener de la diode Z1 sera de l'ordre de 18 volts. La tension V2 sera par exemple égale à 5 volts. Le circuit de régulation 13 sera par exemple un circuit disponible auprès de la société STMicroelectronics sous la référence ST78L05A.

En outre, le circuit comprend entre la cathode de la diode d1 et la grille du transistor T1 une diode de recirculation d2.

Les bornes 10 et 11 sont respectivement connectées à des bornes de sortie 14 et 15, une diode D étant insérée entre les bornes 10 et 14. Dans l'exemple représenté, les bornes 11 et 15 sont confondues. Entre les bornes 14 et 15 est disposé un condensateur de forte valeur C destiné à stocker une tension continue entre des phases de recharge. Une charge L pourra être disposée entre les bornes 14 et 15 et correspond par exemple à un ensemble des six commutateurs S1 à S6 alimentant des enroulements de moteur comme cela a été décrit en relation avec la figure 1.

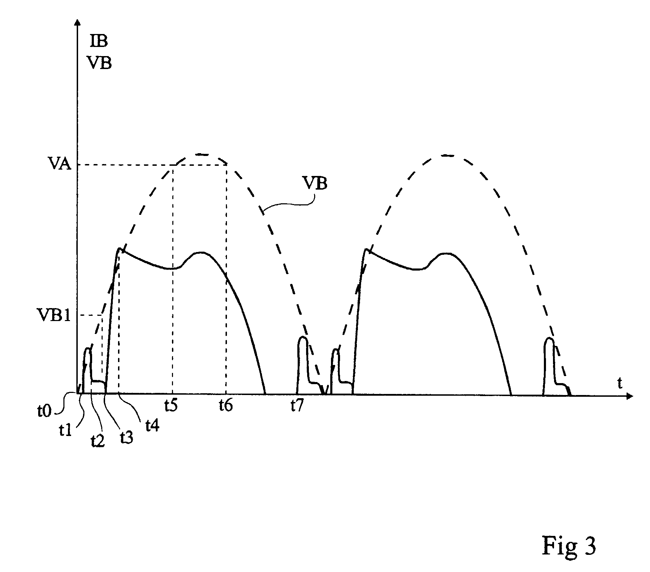

Le fonctionnement de ce circuit va être décrit en relation avec la figure 3. On désigne par I_{B} le courant de sortie du pont redresseur, par V_{B} la tension de sortie sur la borne 10 du pont redresseur, par I_{C} le courant traversant la diode D et circulant vers le condensateur C et/ou la charge L, et par V_{A} la tension entre les bornes de sortie 14 et 15.

La figure 3 représente en pointillés des arches de sinusoïde correspondant à l'allure générale de la tension V_{B} et, en traits pleins, le courant I_{B} pris sur le secteur par le pont redresseur 1. On suppose que l'on se place dans un état où le circuit a déjà fonctionné, c'est-à-dire que le condensateur C est chargé à une tension élevée légèrement inférieure à la valeur de crête de la tension V_{B} et que le condensateur C1 est chargé à la tension V1. Ainsi, à l'instant t₀, la tension V_{B} commence à croître et aucun courant ne circule.

A un instant t₁, dès que la tension V_{B}, qui est appliquée sur la grille du transistor T1, atteint une valeur suffisamment supérieure à la tension sur l'émetteur de ce transistor [V1 + (chute de tension dans la diode d1) + (chute de tension grille-émetteur du transistor T1)], le transistor T1 devient conducteur. La tension de grille de ce transistor est ensuite stabilisée à une valeur peu supérieure à cette valeur de mise en conduction par la diode Z1. A partir de l'instant t₁, un courant relativement important circule dans le transistor T1, la diode d1 et la résistance R3 pour recharger le condensateur C1. Ensuite, à partir de l'instant t₂, ce courant se stabilise à une valeur plus faible correspondant à la consommation sur les sources d'alimentation basse tension V1 et V2.

A un instant t₃, qui correspond à une valeur choisie V_{B1} de la tension V_{B}, par exemple sensiblement égale à 100 volts on interrompt la conduction du transistor T1 en commandant par un signal X la mise en conduction du transistor T3. La grille du transistor T1 se décharge alors. Toutefois, la valeur de la résistance R2, bien qu'inférieure à la résistance R1, est suffisamment élevée pour que le condensateur C1 ne se décharge que très faiblement pendant une alternance de la tension d'alimentation. Ainsi, la tension sur la grille du transistor T1 reste sensiblement égale à la tension sur le condensateur C1, c'est-à-dire de l'ordre de 15 volts dans l'exemple précédent.

Immédiatement après la fermeture du transistor T3, une impulsion de tension Y est appliquée sur la grille du transistor T2 pour rendre celui-ci passant pendant une brève durée. Ainsi, le potentiel sur l'émetteur du transistor T1 chute brutalement alors que sa grille, polarisée par le condensateur C1 à travers la résistance R3 et la diode d2 est encore à un niveau élevé. Ainsi, le transistor T1 redevient passant. A partir de l'instant de refermeture du transistor T1, le courant circule dans les transistors T1 et T2 ainsi que dans les inductances 2-1 et 2-2 et croît très rapidement jusqu'à un instant t₄, qui correspond à la fin de l'impulsion Y appliquée sur la grille du transistor T3. Pendant cette phase, on peut considérer que la tension du secteur entre les bornes 10 et 11 est appliquée totalement aux inductances 2-1, 2-2 qui accumulent de l'énergie.

A la fin de l'impulsion Y, à l'instant t₄, le transistor T2 est ouvert mais, pendant une phase transitoire, le transistor T1 reste passant et le courant dans les inductances continue à circuler entre les bornes d'alimentation alternative en passant de la borne 10 à la borne 11 à travers le transistor T1, les diodes d1 et d2 et la diode Zener Z1. Pendant cette phase, le courant décroît progressivement dans le canal du transistor T1 en fonction de la vitesse de fermeture du transistor T2 puis, dès que la tension V_{B} sur la borne 10 dépasse la valeur instantanée de la tension V_{A} (instant t₅), la diode D devient passante et la circulation de courant s'interrompt dans le transistor T1. Le courant fourni par le pont redresseur sert alors à recharger le condensateur C et à alimenter la charge L à travers la diode D. La conduction se poursuit jusqu'à ce que la tension V_{B} passe nettement en dessous de la valeur de la tension V_{A}, ce qui survient un certain temps après l'instant t₆.

Ensuite, le courant I_{B} devient nul jusqu'à un instant t₇ auquel le signal X appliqué sur la base du transistor T3 rebloque ce transistor de sorte que la tension sur la grille du transistor T1 remonte et qu'il recircule un courant dans ce transistor pour recharger le condensateur C1. On obtient ainsi en fin d'alternance un nouveau cycle de passage de courant qui a sensiblement la même allure que celui du début de la phase de conduction. On notera toutefois que le pic de courant est normalement légèrement plus élevé puisque la durée qui s'est écoulée depuis la phase précédente de recharge du condensateur C1 est plus longue qu'entre l'instant t₇ et l'instant t₁ de l'alternance suivante.

Ainsi, selon la présente invention, on a obtenu une circulation du courant I_{B} pendant des phases relativement étendues d'une alternance de la tension secteur. On notera que, en l'absence du circuit selon l'invention, on aurait eu une circulation de courant I_{B} sensiblement seulement pendant la phase t₅-t₆ quand la tension du secteur devient supérieure à la tension aux bornes du condensateur C.

Le signal X peut être obtenu de façon analogique, par exemple en reliant la base du transistor T3 à la borne 10 par l'intermédiaire d'une résistance et en reliant cette base à la borne 11 par l'intermédiaire d'une diode Zener ayant par exemple une tension Zener de l'ordre d'une centaine de volts. Ainsi, la consommation de courant dans le circuit d'alimentation basse tension est interrompue dès que la tension du secteur dépasse une centaine de volts. L'impulsion de commande Y peut être fournie de façon automatique en détectant la mise en conduction du transistor T3 puis en commandant pendant une durée déterminée la conduction du transistor T2 par divers moyens connus. Toutefois, selon la présente invention, on tirera de préférence partie du fait que les applications envisagées sont des applications dans lesquelles il est prévu un microcontrôleur, comme cela a été décrit en relation avec la figure 1, et l'on utilisera ce microcontrôleur pour produire les signaux X et Y. On notera que la durée de conduction du transistor T2 permet d'assurer une régulation de la tension V_{A} et également d'assurer une optimisation de la forme du courant extrait entre les instants t₃ et t₆ et notamment de la valeur du minimum de ce courant, à l'instant t₅.

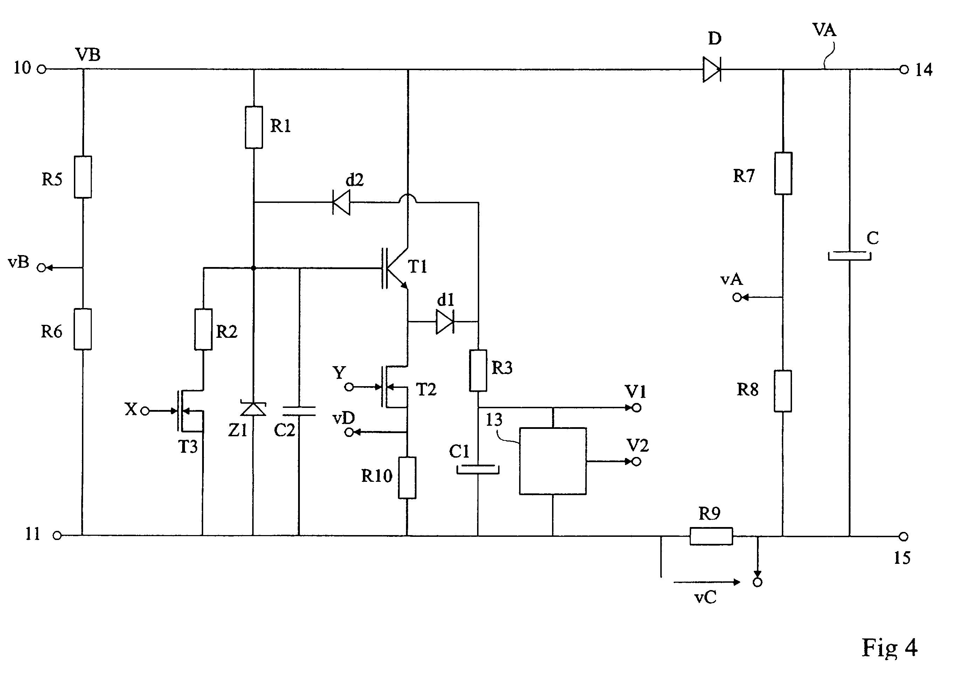

La figure 4 représente un mode de réalisation un peu plus détaillé du circuit de la figure 2 indiquant notamment une façon d'extraire les signaux nécessaires à la commande du microprocesseur. En figure 4, la tension de sortie du pont redresseur apparaît sur les bornes 10 et 11 et la tension aux bornes de la charge apparaît entre les bornes 14 et 15. Dans cette figure, de mêmes références qu'en figure 2 désignent de mêmes éléments. Le transistor T3 a été représenté à titre de variante sous forme d'un transistor MOS, et ceci ne change pas le fonctionnement du circuit. Un condensateur C2 a été disposé en parallèle sur la diode Z1 et est destiné à éviter les oscillations de tension sur la grille du transistor T1.

Un pont diviseur comprenant des résistances R5 et R6 est connecté entre les bornes 10 et 11 pour fournir une tension v_{B} qui constitue une image de la tension V_{B}. Un pont diviseur comprenant des résistances R7 et R8 est connecté entre les bornes 14 et 15 pour fournir une tension vA qui est une image de la tension V_{A}. En outre, une petite résistance R9 est disposée en série avec le circuit d'alimentation principal de sorte que la tension v_{C} à ses bornes est une image du courant de charge I_{C}, qui correspond au courant circulant dans la diode D. Enfin, on peut prévoir une résistance de faible valeur R10 connectée en série avec les transistors T1 et T2 de sorte que la tension v_{D} à ses bornes est une image du courant dans la chaîne de transistors principale. Cette dernière information pourra être utilisée à titre de sécurité pour ouvrir le transistor T2 si le courant devient trop élevé pendant la phase t₃-t₄. En se basant sur les informations fournies par ces tensions v_{B}, v_{A}, v_{C} et v_{D}, on pourra fournir les créneaux X et Y. Le signal X sera à zéro tant que la tension V_{B} sera inférieure à un seuil déterminé. La durée du créneau Y sera déterminée de sorte que V_{A} reste inférieure d'une valeur déterminée à la valeur de crête de V_{B} et de sorte que la décroissance du courant à l'instant t₅ soit optimisée. Ces deux réglages seront facilement réalisés en programmant de façon appropriée le microcontrôleur de commande.

Parmi les avantages du circuit selon la présente invention, on notera que la puissance dissipée par le circuit de fourniture de tensions d'alimentation basses V1 et V2 est minimum car ce circuit ne consomme que si la puissance est effectivement extraite des sources de tension basses V1 et V2. De plus, la recharge de ces circuits n'est fournie que pendant que la tension du secteur est relativement faible (inférieure à une valeur de référence par exemple égale à 100 volts). Un autre avantage du circuit selon la présente invention est qu'il n'utilise à aucun moment de composants fonctionnant à fréquence élevée. La fréquence de commande la plus haute parmi les fréquences appliquées est le double de la fréquence du secteur, c'est-à-dire 100 ou 120 Hz dans le cas des deux systèmes normalisés les plus courants.

Un autre avantage de la présente invention est que l'étage de puissance du régulateur de tension et du correcteur d'harmoniques est commun, ce qui apporte une réduction du coût du système.

A titre d'exemple numérique, on pourra prévoir pour les divers composants illustrés en figure 4 les valeurs suivantes :
- R1 :: 470 kΩ
- R2 :: 10 kΩ
- R3 :: quelques ohms
- R5 :: 1 MΩ
- R6 :: 12 kΩ
- R7 :: 1 MΩ
- R8 :: 12 kΩ
- R9 :: 1 Ω
- R10 :: 1 Ω
- Z1: tension Zener 18 volts
- C :: 220 *µ*F/400 V
- C1 :: 470 *µ*F/25 V
- C2 :: 10 nF/50 V

La présente invention est susceptible de nombreuses variantes et modifications et s'applique aussi à des circuits de type doubleur.

## Revendications

1. Circuit de fourniture d'une tension continue de valeur haute à partir de la sortie redressée d'un pont redresseur (1) sur un condensateur (C) de forte capacité, et de fourniture de tensions d'alimentation basses (V1, V2), caractérisé en ce qu'il comprend :
une première diode (D) connectée entre la première borne (10) de sortie du pont redresseur et une première borne du condensateur (C),
des premier (T1) et deuxième (T2) transistors montés en cascode, la première borne principale du premier transistor (T1) étant connectée à la première borne de sortie (10) du pont redresseur, la deuxième borne principale du deuxième transistor étant connectée à la deuxième borne de sortie (11) du pont,
un moyen (R1, Z1) pour fixer le potentiel de la borne de commande du premier transistor à une première tension par rapport à la deuxième borne du pont,
un moyen (T3, R2) pour réduire le potentiel de ladite borne de commande quand la tension sur la première borne dépasse une valeur prédéterminée,
un circuit de régulation (7) connecté au point de connexion des premier et deuxième transistors,
une deuxième diode (d2) reliant le point de connexion des premier et deuxième transistors à la borne de commande du premier transistor, et
un moyen pour appliquer au deuxième transistor une impulsion de mise en conduction de durée déterminée (Y) après que la tension de sortie du pont a dépassé ladite valeur déterminée.

2. Circuit selon la revendication 1, caractérisé en ce que le premier transistor (T1) est un transistor bipolaire à grille isolée (IGBT).

3. Circuit selon la revendication 1, caractérisé en ce que le deuxième transistor (T2) est un transistor MOS.

4. Circuit selon la revendication 1, caractérisé en ce que les signaux de commande dudit moyen (T3, R2) pour réduire le potentiel sont fournis par un microcontrôleur à partir d'une détection de la tension de sortie du pont redresseur, de la tension de sortie de la première diode (D), et du courant dans cette première diode (D).

5. Circuit selon la revendication 1, caractérisé en ce que le circuit de régulation comprend une troisième diode (d1) connectée au point de connexion des premier et deuxième transistors et un condensateur (C1) connecté entre cette diode et la borne basse de la tension redressée.
